# FASCICULE DE BREVET EUROPEEN

(11) **EP 1 748 053 B1**
(45) Date de publication et mention de la délivrance du brevet: **13.07.2011**
(21) Numéro de dépôt: 06291213.4
(22) Date de dépôt: 26.07.2006
(51) Int. Cl.: C08F 14/22, C08F 2/18

(54) **Procédé de fabrication de terpolymères diélectriques à base de difluorure de vinylidène et de trifluoroéthylène**
Verfahren zur Herstellung von dielektrischen Terpolymeren von Vinylidenfluorid und Trifluorethylen
Process for the manufacture of dielectric terpolymer of vinylidene fluoride and trifluoroethylene

(30) Priorité: 28.07.2005 FR 0508050
(43) Date de publication de la demande: 31.01.2007
(73) Titulaire: Institut Franco-Allemand de Recherches de Saint-Louis, 68301 Saint Louis Cedex (FR)
(72) Inventeur: Baras, Christian, 68300 Saint-Louis (FR); Blaise, Jean, 69002 Lyon (FR); Bauer, François, 68300 Saint-Louis (FR); Fousson, Eric, 68330 Huningue (FR)

(56) Documents cités:
- EP-A- 0 391 421
- WO-A-02/079285
- BAUER F ET AL: "FERROELECTRIC COPOLYMERS AND TERPOLYMERS FOR ELECTROSTRICTORS: SYNTHESIS AND PROPERTIES" IEEE TRANSACTIONS ON DIELECTRICS AND ELECTRICAL INSULATION, IEEE SERVICE CENTER, PISCATAWAY, NJ, US, vol. 11, no. 2, 2004, pages 293-298, XP002376851 ISSN: 1070-9878
- BELFIELD K D ET AL: "SYNTHESIS AND CHARACTERIZATION OF FLUORINATED TER-POLYMERS" PAPERS PRESENTED AT THE MEETING - AMERICAN CHEMICAL SOCIETY. DIVISION OF POLYMER CHEMISTRY, XX, XX, vol. 43, no. 1, 2002, pages 494-495, XP009065256 ISSN: 0032-3934

## Description

L'invention concerne la fabrication de copolymères du difluorure de vinylidène et du trifluoroéthylène, notamment de terpolymères qui sont relaxeurs avec des propriétés électrostrictives.

Plus particulièrement, l'invention se rapporte aux copolymères comprenant du difluorure de vinylidène (VDF) et du trifluoroéthylène (TrFE) associés à au moins un autre monomère plus réactif que ceux-ci, tel que le chlorofluoro-1, 1, éthylène (CFE).

Les copolymères recherchés doivent présenter un caractère relaxeur, ce qui implique que la barrière de transformation entre les phases polaire et non polaire soit diffuse et qu'à température ambiante un changement réversible entre ces phases puisse être induit sous l'action d'un champ électrique, avec très peu d'hystérésis. Ils doivent posséder également une bonne élasticité mécanique permettant une déformation longitudinale importante sous l'action d'un champ électrique.

Ces polymères doivent, en outre, être dotés de propriétés électrostrictives, c'est-à-dire impliquant que leur déformation soit une fonction du carré du champ électrique appliqué.

Ces caractéristiques doivent se traduire, notamment, par une constante diélectrique élevée au moins supérieure à 50 et une déformation longitudinale induite par un champ électrique au moins égale à 4%, ainsi que des qualités mécaniques telles qu'une élasticité caractérisée par un module d'Young au moins égal à 0,3 GPa, et une bonne homogénéité mécanique et électrique.

On connaît des matériaux présentant à la fois de hauts niveaux de déformation induite par un champ électrique, de hautes densités d'énergie élastique et de fortes constantes diélectriques à température ambiante. Ces matériaux sont utilisés dans des dispositifs électromécaniques convertissant l'énergie électrique en énergie mécanique ou vice versa. Ces matériaux sont des céramiques ou des polymères.

Les céramiques, tout en possédant une faible hystérésis et une forte vitesse de réponse, présentent l'inconvénient d'avoir de faibles niveaux de déformation qui sont de l'ordre de 0,1%.

Les polymères commercialisés ont l'inconvénient de présenter de faibles déformations induites par un champ électrique correspondant à des constantes diélectriques inférieures à 12.

Dans le brevet US 6 423 412, sont décrits des polymères de fluorure de vinylidène, notamment des copolymères composés de x% en moles de VDF et de (100-x)% en moles de TrFE où x est compris entre 50 et 70 et des terpolymères de fluorure de vinylidène, de fluorure de trifluoroéthylène et d'hexafluorure de propylène.

Ces polymères ont subi un recuit d'environ 130°C à 140°C pendant environ 16 heures, puis une irradiation sous atmosphère dépourvue d'oxygène avec une énergie dans la gamme d'environ 500 keV à 3 MeV, afin de donner naissance à des polymères ferroélectriques à caractère relaxeur qui présentent, à température ambiante, une déformation électrostrictive d'au moins 4%, lorsqu'on leur applique un champ électrique d'au moins 100MV/m.

Ces polymères présentent un comportement ferroélectrique relaxeur, et par conséquent un faible ventre d'hystérésis de polarisation sous champ électrique, couplé à une valeur élevée de champ électrique de claquage.

Toutefois la fabrication des polymères décrits nécessite une irradiation et leurs propriétés ne sont pas acceptables pour les applications recherchées dans l'invention.

Le brevet US 6 787 238 divulgue des terpolymères comprenant du fluorure de vinylidène (VDF) associé à un 2^{ème} monomère choisi parmi le trifluoroéthylène (TrFE) ou le tétrafluoroéthylène et à un 3^{ème} monomère, notamment le chlorofluoro-1,1,éthylène (CFE).

Ces polymères, lorsqu'ils sont étirés au-delà de leur longueur initiale et ensuite recuits à une température inférieure à leur point de fusion, présentent une déformation induite, à température ambiante, d'au moins 3% lorsqu'on leur applique un champ électrique de 100 mégavolts/mètre, une constante diélectrique relative, à température ambiante, d'au moins 40 à 1 kHZ et une densité d'énergie élastique, à température ambiante d'au moins 0,3 joules/cm³.

Dans ce document, on a mesuré la variation de la déformation longitudinale induite par un champ électrique en fonction de l'amplitude du champ, à température ambiante, pour un terpolymère composé de 60% en moles de VDF, 36% en moles de TrFE et 4% en moles de CFE.Pour ce polymère, une déformation longitudinale relativement élevée (-4,5%) est induite sous un champ d'environ 150 MV/m. Le polymère présente un fort module élastique d'environ 1 Gpa qui correspond à une densité d'énergie élastique d'environ 1 J/cm³, beaucoup plus élevée que celle des matériaux piezoélectriques. Ce terpolymère est composé de x% en moles de VDF, y% en moles de TrFE et (100-x-y)% de CFE où x est compris entre 55 et 80 et y entre 15 et 40.

Cependant, les terpolymères décrits dans ce document ne possèdent pas le degré de performances requis dans la présente invention.

Un procédé de fabrication de terpolymères diélectriques composés de 60 à 79% en moles de fluorure de vinylidène, de 18 à 22% en moles de trifluoroéthylène et de 3 à 22% en moles de chlorotrifluoroéthylène est décrit dans le brevet US 5 087 679.

D'autres monomères, tels que le tétrafluoroéthylène et le fluorure de vinyle peuvent être ajoutés aux 3 monomères de base.

Selon ce procédé, la polymérisation est réalisée en suspension aqueuse, c'est-à-dire avec l'intervention d'initiateurs oléosolubles de polymérisation radicalaire et en présence d'agent de mise en suspension.

La polymérisation s'effectue dans un autoclave, à température de préférence comprise entre 5°C et 95°C, sous une pression inférieure à 50kg/cm².

Les polymères obtenus possèdent une constante diélectrique supérieure à 30, à température ambiante. La constante diélectrique la plus élevée apparaissant dans les exemples est de 46,7, ce qui représente une valeur inférieure à celle recherchée dans l'invention.

Dans IEEE Transactions on Dielectrics and Electrical Insulation, vol.11, n°2, 2004, p.293-298, XP-002376851, F. Bauer, E. Fousson, Q.M. Zhang et L.M Lee divulguent un procédé de fabrication de terpolymères diélectriques, selon lequel on charge un mélange de monomères VDF/TrFE/CFE dans un autoclave à température et pression constante et l'on réinjecte de façon continue un mélange de ces monomères constitutifs au cours de la réaction de polymérisation. Cependant, les composés obtenus ne présentent pas une bonne tenue électrique, étant donné que leur valeur de champ de claquage n'atteint que 250V/µm, ni une bonne homogénéité électrique et mécanique.

Le but de l'invention est de fournir un procédé de synthèse de polymères dont les propriétés souhaitées sont celles de matériaux relaxeurs possédant des propriétés électrostrictives. Les propriétés communes à ces matériaux sont une transition de phase diffuse, un cycle d'hystérésis très aminci, une forte constante diélectrique à température ambiante et une déformation relative élevée en valeur absolue.

Ces polymères doivent présenter une constante diélectrique au moins égale à 50, à température ambiante, une polarisation induite sous champ électrique élevée d'au moins 0,1C/m², une bonne tenue électrique se traduisant par une valeur de champ électrique de claquage supérieure à 400mV/m, ce qui conduit à une forte densité d'énergie électrique de stockage s'élevant à au moins à 10J/cm³ sous 350MV/m, une déformation longitudinale électrique induite supérieure à 4%.

En plus des propriétés électriques ci-dessus, les polymères selon l'invention doivent présenter d'excellentes propriétés mécaniques, telles qu'une élasticité correspondant à un module d'Young égal ou supérieur à 0,3GPa et un facteur d'étirage supérieur à 3, lorsqu'ils sont façonnés sous forme de films.

Le procédé de l'invention doit assurer une bonne homogénéité électrique et mécanique aux produits obtenus.

Enfin, il doit permettre de fabriquer les polymères en quantités suffisantes.

Les copolymères à base de difluorure de vinylidène peuvent présenter les propriétés recherchées.

Cependant, aucun des copolymères à base de difluorure de vinylidène mentionnés dans les documents antérieurs ne répond aux critères requis.

On a alors cherché à mettre au point des copolymères comprenant au moins du difluorure de vinylidène (VDF) et du trifluoroéthylène (TrFE) avec une gamme de pourcentages molaires des monomères constitutifs variables, mais des difficultés imprévues ont surgi lors de la préparation de ceux-ci.

En effet, au cours d'essais de fabrication de terpolymères de VDF, de TrFE et chlorofluoro-1,1,éthylène (CFE) de différentes compositions molaires, on n'a pas réussi à obtenir des terpolymères présentant les propriétés recherchées.

On a constaté, de manière surprenante, qu'il fallait utiliser un mélange de monomères beaucoup plus pauvre en CFE que la composition molaire initiale prévue et qu'il fallait des conditions opératoires tout à fait particulières.

L'invention concerne un procédé de fabrication par la méthode de polymérisation dite en suspension de copolymères diélectriques comprenant au moins trois monomères dont le difluorure de vinylidène (VDF) et le trifluoroéthylène (TrFE) associés à au moins un troisième monomère 2 à 10 fois plus réactif que ces derniers, du type consistant à injecter un mélange des monomères constitutifs dans un autoclave à température et pression constante et à réinjecter de façon continue et à pression constante, dès que la réaction est initiée et pendant toute la durée de la polymérisation, un mélange des monomères constitutifs, caractérisé en ce que la composition molaire du mélange initial et celle du mélange réinjecté sont déterminées par calcul, de manière connue en soi, en tenant compte de la composition molaire du copolymère souhaitée et de la plus forte réactivité du troisième monomère.

Les copolymères sont, de préférence des terpolymères.

De manière avantageuse, les terpolymères sont constitués de difluorure de vinylidène (VDF), de trifluoroéthylène (TrFE) et de chlorofluoro-1,1,éthylène (CFE).

Préférentiellement, le terpolymère obtenu est composé de x% en moles de VDF, de y% en moles de TrFE et de (100-x-y)% en moles de CFE où x est compris entre 40 et 70, y est compris entre 20 et 40 et où la somme de x et y est comprise entre 90 et 95.

Selon un mode de réalisation, le terpolymère obtenu est composé de 57,9% en moles de VDF, 34,5% en moles de TrFE et de 7,6% en moles de CFE.

Dans un autre mode de réalisation, le terpolymère obtenu est composé de 64,3% en moles de VDF, 27,6% en moles de TrFE et 8,1% en moles de CFE.

De préférence, on utilise un mélange initial de monomères composé de α% en moles de CFE, dans lequel α est un nombre inférieur à 1,5.

Avantageusement, on réinjecte un mélange de monomères composé de β% en moles de CFE, dans lequel β est un nombre supérieur à 12.

Le nombre β est préférentiellement voisin de 14.

La synthèse de polymères fluorés à partir de monomères peut être effectuée selon différents procédés, tels que la polymérisation en solution, en masse, en émulsion et en suspension.

On utilise la polymérisation dite en suspension qui est une polymérisation en suspension aqueuse réalisée à l'aide d'initiateurs oléosolubles de polymérisation radicalaire et en présence d'agent de mise en suspension.

Cette façon de procéder permet la polymérisation en masse fragmentée dans un milieu qui évacue les calories.

Les initiateurs et les agents de mise en suspension sont décrits dans la littérature.

A titre d'initiateurs de polymérisation radicalaire, on peut citer les peroxydicarbonates de dialkyle, notamment les peroxydicarbonates de diéthyle et de diisopropyle.

L'agent de mise en suspension peut être choisi parmi les éthers cellulosiques, tels que les alkyl- et alkylhydroxyalkylcelluloses.

La réaction est effectuée dans un autoclave en chargeant un mélange des monomères constitutifs dans le volume réactionnel prévu, en présence d'un peroxyde.

La cinétique réactionnelle dépend, d'une part, de la pression qui est de préférence maintenue constante pendant la synthèse et, d'autre part, de la température qui est maintenue stable.

Les monomères sont injectés et comprimés à une pression comprise entre 80 et 100 bars, par exemple à 90 bars, en phase critique.

La température de réaction est comprise entre 40°C et 60°C, de préférence 50°C.

On introduit le peroxyde.

Lors des premiers essais, on a chargé le mélange des monomères constitutifs dans le volume réactionnel prévu.

Pour un triplé de monomères donné, tels que le VDF, le TrFE et le CFE, on a essayé des mélanges avec différents pourcentages molaires des trois constituants.

Avec un mélange de 60,5% en moles de VDF, 33,2% en moles de TrFE et 6,3% en moles de CFE, on a obtenu, dans les conditions précitées, un terpolymère ferroélectrique et non relaxeur, c'est-à-dire ne répondant pas aux critères recherchés.

On a supposé que le CFE est plus réactif que les autres monomères et on a alors répété la synthèse en chargeant le même mélange dans un volume réactionnel plus petit. On a procédé à des réinjections du même mélange de monomères de façon séquentielle et à pression constante, pour tenir compte de la réactivité plus élevée du CFE. Le terpolymère ainsi obtenu est composé de 63,8% en moles de VDF, 29,5% en moles de TrFE et 6,7% en moles de CFE. Il présente un effet relaxeur faible et garde un caractère ferroélectrique.

Différents essais ont été reconduits, mais en réinjectant le mélange de monomères de façon continue et à pression constante. Les terpolymères obtenus présentent un effet relaxeur élevé caractérisé par une déformation relative de 7% à 150 V/µm et une constante diélectrique élevée de 60.

Par contre, le film obtenu par évaporation d'un solvant est peu homogène, sa tenue mécanique est faible et sa rigidité diélectrique n'atteint que 250 V//µm.

On a constaté, de manière surprenante, qu'une charge de mélange de monomères comprenant 62 % en moles de VDF, 35 % en moles de TrFE et 3 % en moles de CFE conduit à un polymère huit fois plus riche en CFE.

On a alors eu l'idée de synthétiser un terpolymère en injectant une charge de mélange de monomères pauvre en CFE comprenant α% en moles de CFE où α est inférieur à 1,5, dans le volume réactionnel prédéfini.

Dès que la réaction démarre, on réinjecte de façon continue et à pression constante, un mélange de monomères plus riche en CFE, déterminé par calcul. Ce calcul permet à l'homme de l'art, en tenant compte de la réactivité du CFE, de déterminer les quantités de monomères du mélange comprenant β% en moles de CFE à injecter, où β est supérieur à 12, afin de poursuivre la réaction et pour reconstituer la composition initiale prévue.

Il est à noter qu'un mélange gazeux binaire de composition donnée de VDF et TrFE conduit à un copolymère de même composition et reste identique tout au long de la copolymérisation, lorsque les monomères sont purs.

Pour obtenir un terpolymère VDF/TrFE/CFE de composition pondérale initiale donnée, on doit tenir compte des réactivités différentes des monomères. En particulier, le monomère CFE est, par exemple 6 à 10 fois plus réactif que le mélange binaire VDF/TrFE, cette réactivité dépendant de la pression et de la température. Le mélange initial des trois monomères sera donc 6 à 10 fois plus pauvre en CFE. En maintenant la pression constante à une valeur donnée et, après contrôle du début de la polymérisation et d'un certain taux de conversion en polymère, on peut estimer la composition du mélange à introduire. Le volume réactionnel et le taux de conversion pris en compte permettent donc de déterminer les quantités des trois monomères à introduire pour reconstituer la composition initiale.

A la fin de la synthèse effectuée de cette façon, on constate que l'on obtient un terpolymère dont la composition, déterminée par analyse élémentaire, est pratiquement celle attendue.

Le produit obtenu est sous la forme de poudre.

On a synthétisé ainsi différents terpolymères VDF/TrFE/CFE dont les compositions en pourcentage molaire sont proches en moyenne de 63/29/8.

La polymérisation s'effectue en 5 à 10 heures environ à la température de 50°C.

La poudre de terpolymère obtenue par lots de 400g à 1500g est lavée à l'eau désionisée, au méthanol, puis séchée.

Afin de déterminer les caractéristiques électriques et mécaniques des produits, des échantillons sous forme de films de l'ordre de 30µm d'épaisseur ont été préparés par dépôt au moyen d'une tournette sur un support en silicium ou par enduction sur un support en verre ou en polyéthylène d'une solution de méthyléthylcétone contenant 10% de terpolymère. Les films ont subi un traitement thermique afin de les stabiliser et d'augmenter leur cristallinité. Des électrodes en or ont été déposées par pulvérisation cathodique de part et d'autre du film afin de réaliser les condensateurs d'épreuve.

Les mesures de polarisation ont été effectuées dans la gamme de fréquence de 0,1 à 1 Hz.

La déformation induite sous champ électrique a été mesurée à température ambiante dans la gamme de champ de 0 à 200MV/m.

Les terpolymères obtenus dans ces conditions présentent les caractéristiques recherchées :
- parfaitement relaxeurs,
- constante diélectrique à température ambiante, mesurée à 1Kz, supérieure à 50,
- déformation relative sous champ électrique atteignant déjà 4% à un champ plus faible que celui nécessaire pour atteindre ce niveau de déformation avec les autres composés de l'état de la technique,
- tenue diélectrique de l'ordre de 400 V/µm,
- élasticité correspondant à un module d'Young supérieur à 0,3GPa,
- tenue mécanique du film obtenu par évaporation d'un solvant bien supérieure à celle des autres composés précédemment synthétisés,
- facilement étirables, avec un facteur d'étirage supérieur à 3,
- homogénéité mécanique et électrique excellente.

La description sera mieux comprise à l'aide des exemples non limitatifs ci-après.

### Exemple 1: Synthèse du terpolymère VDF_{69,3}/TrFE_{24,2}/CFE_{6,5}

Afin d'obtenir un terpolymère comportant 60,5% en moles de VDF, 32,5% en moles de TrFE et 7% en moles de CFE, on injecte dans un autoclave d'un volume de 4 litres, préalablement rempli de 3 litres d'eau, un mélange gazeux de 400g composé de 64,3% en moles de VDF, 34,5% en moles de TrFE et 1,2% en moles de CFE, en présence d'un initiateur de type peroxydicarbonate de diéthyle (DEPDC)et d'un agent de mise en suspension de type méthylcellulose. On opère à une pression de 98 bars et à une température de 45°C.

Dès que la réaction démarre, on réinjecte de façon continue et à pression constante, tout au long de la réaction, 500g d'un mélange gazeux composé de 57,4% en moles de VDF, 30,9% en moles de TrFE et 11,7% en moles de CFE.

A l'issue de la polymérisation, on recueille 480g de produit sous forme de fine poudre blanche. Après lavage et séchage, la composition en pourcentage molaire du terpolymère, déterminée par analyse élémentaire des éléments C, Cl, F, est de 69,3/24,2/6,5 respectivement pour VDF/TrFE/CFE.

Le composé est façonné sous forme de film et ensuite recuit pendant 4 heures.

La transition de Curie est étalée en température.

Le cycle d'hystérésis très fin est typiquement celui d'un composé au comportement relaxeur.

La constante diélectrique mesurée à 1KHz, à température ambiante, s'élève à 56.

La déformation longitudinale relative atteint 5,5% pour un champ appliqué de 150V/µm.

Le module d'élasticité est de 350Mpa.

Le matériau est mécaniquement très homogène.

### Exemple 2 : Synthèse du terpolymère VDF_{57,9}/TrFE_{34,5}/CFE_{7,6}

Afin d'obtenir un terpolymère comportant 56,2% en moles de VDF, 36,3% en moles de TrFE et 7,5% en moles de CFE, on injecte dans l'autoclave un mélange gazeux composé de 60,1% en moles de VDF, 38,7% en moles de TrFE et 1,2% en moles de CFE, en présence deDEPDC et de méthylcellulose, à une pression de 86 bars et une température de 46°C.

Dès que la réaction démarre, on réinjecte, de façon continue et à pression constante, un mélange de 53,2% en moles de VDF, 34,2% en moles de TrFE et 12,6% en moles de CFE.

Après 7 heures et demie de polymérisation, la composition en pourcentage molaire du terpolymère obtenu, déterminée par analyse élémentaire est de 57,9/34,5/7,6 respectivement pour VDF/TrFE/CFE.

La constante diélectrique, mesurée à 1KHz, à température ambiante s'élève à 56.

La déformation longitudinale relative atteint 4% pour un champ appliqué de 150V/µm.

Le module d'élasticité est de300Mpa.

### Exemple 3: Synthèse du terpolymèreVDF_{64,3}/TrFE_{27,6}/CFE_{8,1}

Afin d'obtenir un terpolymère comportant 61,5% en moles de VDF, 30% en moles de TrFE et 8,5% en moles de CFE, on injecte dans l'autoclave un mélange gazeux composé de 66,5% en moles de VDF, 32,4% en moles de TrFE et de 1,1% en moles de CFE, en présence de DEPDC et de méthylcellulose, à une pression de 90 bars et une température de 47°C.

Dès que la réaction démarre, on réinjecte de façon continue et à pression constante un mélange de 57,4% en moles de VDF, 28% en moles de TrFE et de 14,6% en moles de CFE.

Après 10 heures de polymérisation, la composition en pourcentage molaire du terpolymère obtenu, déterminée par analyse élémentaire est de 64,3/27,6/8,1 respectivement pour VDF/TrFE/CFE.

La constante diélectrique, mesurée à 1KHz, à température ambiante s'élève à 52.

La déformation longitudinale relative atteint 6% pour un champ appliqué de 150V/µm.

Le module d'élasticité est de320Mpa.

### Exemple 4: Synthèse de VDF_{59,2}/TrFE_{33,6}/CFE_{7,2}

Afin d'obtenir un terpolymère comportant 58% en moles de VDF, 34% en moles de TrFE et 8% en moles de CFE, on injecte dans l'autoclave un mélange gazeux composé de 62,4% en moles de VDF, 36,6% en moles de TrFE et de 1% en moles de CFE, en présence de DEPDC et de méthylcellulose, à une pression de 88 bars et une température de 48°C.

Dès que la réaction démarre, on réinjecte de façon continue et à pression constante un mélange de 54,4% en moles de VDF, 31,9% en moles de TrFE et de 13,7% en moles de CFE.

Après 10 heures de polymérisation, la composition en pourcentage molaire du terpolymère obtenu, déterminée par analyse élémentaire est de 59,2/33,6/7,2 respectivement pour VDF/TrFE/CFE.

La constante diélectrique, mesurée à 1KHz, à température ambiante s'élève à 50.

La déformation longitudinale relative atteint 6% pour un champ appliqué de 150V/µm.

Le module d'élasticité est de 350MPa.

Le procédé selon l'invention peut également s'appliquer à des composés de type VDF/TrFE/CFE avec un rapport VDF/TrFE proche de 1. La phase ferroélectrique de ces composés se trouve, de ce fait, minimisée, la permittivité est plus faible et n'atteint que 30.

En outre, le procédé de fabrication selon l'invention n'est pas limité aux composés de type VDF/TrFE/CFE.

Il est peut être étendu aux terpolymères constitués de difluorure de vinylidène (VDF), de trifluoroéthylène (TrFE) associés à un monomère choisi parmi le chlorodifluoroéthylène, le chlorofluoro-1,2 éthylène, le chlorure de vinylidène, le chlorotrifluoroéthylène.

Les copolymères selon l'invention peuvent, notamment, servir d'interrupteurs électriques, de condensateurs de stockage, de transducteurs acoustiques, et être utilisés dans des hydrophones, en qualité de matériaux à fort coefficient piézoélectrique.

Ils peuvent aussi servir de transporteurs de calories, étant donné que l'effet électrocalorique important permet d'augmenter ou de diminuer la température du matériau en appliquant une tension d'offset positive ou négative et, de ce fait, être utilisés dans les textiles pour le combattant.

## Revendications

1. Procédé de fabrication par la méthode de polymérisation dite en suspension de terpolymères diélectriques comprenant trois monomères dont le difluorure de vinylidène (VDF) et le trifluoroéthylène (TrFE) associés à un troisième monomère, le chlorofluoro-1,1,éthylène (CFE), du type consistant à injecter un mélange des monomères constitutifs dans un autoclave à température et pression constante et à réinjecter de façon continue et à pression constante, dès que la réaction est initiée et pendant toute la durée de la polymérisation, un mélange des monomères constitutifs, tel que le terpolymère obtenu est composé de x% en moles de VDF , de y% en moles de TrFE et de (100-x-y)% en moles de CFE où x est compris entre 40 et 70, y est compris entre 20 et 40 et où la somme de x et de y est comprise entre 90 et 95, **caractérisé en ce que** ledit mélange initial injecté est composé de α% en moles de CFE où α est inférieur à 1,5.

2. Procédé selon la revendication 1, **caractérisé en ce que**, on réinjecte un mélange de monomères composé de β% en moles de CFE, dans lequel β est un nombre supérieur à 12.

3. procédé selon l'une quelconque des revendications 1 et 2, **caractérisé** et ce que le terpolymère obtenu est composé de 57,9% en moles de VDF, 34,5% en moles de TrFE et de 7,6% en moles de CFE.

4. Procédé selon l'une quelconque des revendications 1 et 2, **caractérisé en ce que** le terpolymère obtenu est composé de 64,3% en moles de VDF, 27,6% en moles de TrFE et de 8,1% en moles de CFE.

## Claims

1. Method of manufacturing, by suspension polymerisation, dielectric terpolymers including three monomers including vinylidene difluoride (VDF) and trifluoroethylene (TrFE) associated with a third monomer : 1,1 chlorofluoroethylene (CFE), of the type consisting of injecting a mixture of the constituent monomers into an autoclave at constant temperature and pressure and continuously reinjecting at constant pressure, as soon as the reaction is initiated and throughout the duration of polymerization, a mixture of the constituent monomers, such as the terpolymer obtained is composed of x mol% VDF, y mol% TrFE, and (100-x-y) mol% CFE where x is between 40 and 70 and y is between 20 and 40 and where the sum of x and y is between 90 and 95 **characterized in that characterized in that** an initial monomer mixture composed of α mol% CFE is used, wherein α is a number less than 1.5.

2. Method according to Claim 1, **characterized in that** a monomer mixture composed of β mol% CFE is reinjected, wherein β is a number greater than 12.

3. Method according to Claim 1 or 2, **characterized in that** the terpolymer obtained is composed of 57.9 mol% VDF, 34.5 mol% TrFE, and 7.6 mol% CFE.

4. Method according to Claim 1 or 2, **characterized in that** the terpolymer obtained is composed of 64.3 mol% VDF, 27.6 mol% TrFE, and 8.1 mol% CFE.

## Patentansprüche

1. Herstellungsverfahren anhand der Suspensionspolymatisationsmethode von dielektrischen Terpolymeren mit drei Monomeren, nämlich Vinylidendifluorid (VDF), Trifluorethylen (TrFE) und 1,1-Chlorfluorethylen (CFE) als drittem Monomer, **dadurch gekennzeichnet, dass** ein Gemisch dieser Monomere bei konstanter Temperatur und gleichbleibendem Druck in einen Autoklav injiziert wird und ab dem Zeitpunkt des Reaktionsbeginns und während der gesamten Polymerisationsdauer ein Gemisch dieser Monomere kontinuierlich und bei gleichbleibendem Druck weiter beigefügt wird, so dass das erhaltene Terpolymer zusammengesetzt ist aus x Mol-% VDF, y Mol-% TrFE und aus (100-x-y)-Mol-% CFE, wobei x zwischen 40 und 70, y zwischen 20 und 40 und die Summe von x und y zwischen 90 und 95 liegt, und **dadurch gekennzeichnet, dass** das injizierte Anfangsgemisch aus a Mol-% CFE zusammengesetzt ist, wobei a unter 1,5 liegt.

2. Verfahren nach Anspruch 1, **dadurch gekennzeichnet, dass** ein Monomergemisch aus b Mol-% CFE weiter beigefügt wird, wobei b einem Wert von über 12 entspricht.

3. Verfahren nach einem beliebigen der Ansprüche 1 and 2, **dadurch gekennzeichnet, dass** das erhaltene Terpolymer aus 57,9 Mol-% VDF, 34,5 Mol-% TrFE und 7,6 Mol-% CFE zusammengesetzt ist.

4. Verfahren nach einem beliebigen der Ansprüche 1 und 2, **dadurch gekennzeichnet, dass** das erhaltene Terpolymer aus 64,3 Mol-% VDF, 27,6 Mol-% TrFE und 8,1 Mol-% CFE zusammengesetzt ist.
